# EUROPEAN PATENT APPLICATION

(11) **EP 4 650 736 A2**
(43) Date of publication of application: **19.11.2025**
(21) Application number: 25199762.3
(22) Date of filing: 22.11.2023
(51) Int. Cl.: G01K 7/16

(54) **ELECTRICAL CONNECTIVITY TO HIGH TEMPERATURE FILM SENSOR DEVICES**

(30) Priority: 22.11.2022 US 202217992101
(62) Divisional of application: 23211582.4
(71) Applicant: RTX Corporation, Farmington, CT 06032 (US); University of Rhode Island Board of Trustees, Kingston, RI 02881 (US)
(72) Inventor: CROTEAU, Paul F., Farmington, 06032 (US); CONSIGLIO, Andrew A., Farmington, 06032 (US); RIVERA, Kevin, Kingston, 02881 (US); GREGORY, Otto, Kingston, 02881 (US)
(74) Representative: Dehns

(57) **Abstract**

The present disclosure provides for electrical connectivity to high temperature film sensor devices (e.g., temperature sensor devices). More particularly, the present disclosure provides for high temperature, thin film sensor devices (e.g., temperature sensor devices) having connection of wires (15A, 15B) and cabling (16) from the cold side (18) to the thin film sensor (28) on the hot side (20). The disclosure provides assemblies and methods for that electrical connection to the leads or traces (17A, 17B) of the thin film sensor device (e.g., thin film temperature sensor device such as a thermocouple or a resistance temperature detector device) at the hot-cold barrier that exists in high temperature components (e.g., high temperature components in aero turbine engine applications). The assemblies and methods of the disclosure can be applied to any thin film device (e.g., sensor devices, such as, for example, strain gauges, heat flux sensors, etc.) that can be applied to the surface of a high temperature component.

## Description

### TECHNICAL FIELD

The present disclosure relates to electrical connectivity to high temperature film sensor devices (e.g., temperature sensor devices) and, more particularly, to high temperature, thin film sensor devices (e.g., temperature sensor devices) having connection of wires and cabling from the cold side to the thin film sensor on the hot side.

### BACKGROUND

In general, the use of thin film applications for creating sensor devices (e.g., thermocouples (TC) or resistance temperature detectors (RTD)) applied to high temperature applications (e.g., for turbine engine vanes, blades, shrouds, or combustor panels) can require the eventual electrical connection of the thin film device back to signal conditioning equipment and/or data acquisition systems. The electrical connection most often will require it to be at or near the high-temperature location that the sensor device (e.g., TC or RTD) is installed. The electrical wires are then routed out to a more adequate temperature environment where the instrumentation and control system reside.

For some thin film sensor devices applied to a hot side surface (e.g., of an aero turbine engine component), the thin film sensor devices can be exposed to hot gas temperatures (e.g., in the range of 2200 °F to 3500 °F). The electrical wires typically need to be connected to the thin film sensor to complete the circuit of the sensor, and the wires can be passed to a less severe environment to the power and/or data acquisition system of the sensor.

### BRIEF DESCRIPTION

The present disclosure provides for electrical connectivity to high temperature film sensor devices (e.g., temperature sensor devices). More particularly, the present disclosure provides for high temperature, thin film sensor devices (e.g., temperature sensor devices) having connection of wires and cabling from the cold side to the thin film sensor on the hot side.

The present disclosure provides for a thin film sensor assembly including a component wall having a hole therethrough, the component wall having a cold side and a hot side; a cable positioned in the hole, the cable having a first wire and a second wire; a layer of low dielectric material positioned on the hot side of the component wall, with a first length of the first wire positioned on the layer of low dielectric material, and a second length of the second wire positioned on the layer of low dielectric material; and a first trace of film material in electrical connection with the first length of the first wire positioned on the layer of low dielectric material and a second trace of film material in electrical connection with the second length of the second wire positioned on the layer of low dielectric material; wherein the first and second traces of film material are in electrical communication with a sensor positioned on the layer of low dielectric material.

In addition to one or more of the features described, or as an alternative to any of the foregoing embodiments, the component wall is a wall of an aero turbine engine component; and wherein the cold side is an internal cooling air cavity side of the aero turbine engine component, and the hot side is an external gas path side of the aero turbine engine component.

In addition to one or more of the features described, or as an alternative to any of the foregoing embodiments, the sensor is a high temperature, thin film temperature sensor.

In addition to one or more of the features described, or as an alternative to any of the foregoing embodiments, the sensor is a thermocouple or a resistance temperature detector.

In addition to one or more of the features described, or as an alternative to any of the foregoing embodiments, the sensor is positioned proximal to the hot side.

In addition to one or more of the features described, or as an alternative to any of the foregoing embodiments, the layer of low dielectric material comprises a ceramic material.

In addition to one or more of the features described, or as an alternative to any of the foregoing embodiments, the cable comprises a sheathing, the sheathing comprising a metal material.

In addition to one or more of the features described, or as an alternative to any of the foregoing embodiments, the component wall is a wall of a vane of an aero turbine engine component.

In addition to one or more of the features described, or as an alternative to any of the foregoing embodiments, the cable is routed and mounted or strain-relieved on the cold side of the component wall and routed to a terminal connection or system equipment.

In addition to one or more of the features described, or as an alternative to any of the foregoing embodiments, the first and second wires comprise electrically conductive metal materials.

The present disclosure provides for a method for fabricating a thin film sensor assembly including providing a component wall having a hole therethrough, the component wall having a cold side and a hot side; positioning a cable in the hole, the cable having a first wire and a second wire; positioning a layer of low dielectric material on the hot side of the component wall; positioning a first length of the first wire on the layer of low dielectric material; positioning a second length of the second wire on the layer of low dielectric material; providing a first trace of film material in electrical connection with the first length of the first wire positioned on the layer of low dielectric material; providing a second trace of film material in electrical connection with the second length of the second wire positioned on the layer of low dielectric material; and positioning a sensor on the layer of low dielectric material, the first and second traces of film material in electrical communication with the sensor.

In addition to one or more of the features described, or as an alternative to any of the foregoing embodiments, the component wall is a wall of an aero turbine engine component; and wherein the cold side is an internal cooling air cavity side of the aero turbine engine component, and the hot side is an external gas path side of the aero turbine engine component.

In addition to one or more of the features described, or as an alternative to any of the foregoing embodiments, the sensor is a high temperature, thin film temperature sensor.

In addition to one or more of the features described, or as an alternative to any of the foregoing embodiments, the sensor is a thermocouple or a resistance temperature detector.

In addition to one or more of the features described, or as an alternative to any of the foregoing embodiments, further comprising after positioning the first and second lengths of the first and second wires on the layer of low dielectric material, providing and curing additional dielectric material over the first and second lengths of the first and second wires, and then removing a portion of the additional dielectric material over the first and second lengths of the first and second wires.

In addition to one or more of the features described, or as an alternative to any of the foregoing embodiments, the layer of low dielectric material comprises a ceramic material.

In addition to one or more of the features described, or as an alternative to any of the foregoing embodiments, the cable comprises a sheathing, the sheathing comprising a metal material.

In addition to one or more of the features described, or as an alternative to any of the foregoing embodiments, the component wall is a wall of a vane of an aero turbine engine component.

In addition to one or more of the features described, or as an alternative to any of the foregoing embodiments, the cable is routed and mounted or strain-relieved on the cold side of the component wall and routed to a terminal connection or system equipment.

In addition to one or more of the features described, or as an alternative to any of the foregoing embodiments, the first and second wires comprise electrically conductive metal materials.

The above described and other features are exemplified by the following figures and detailed description.

Any combination or permutation of embodiments is envisioned. Additional features, functions and applications of the disclosed assemblies, systems and methods of the present disclosure will be apparent from the description which follows, particularly when read in conjunction with the appended figures. All references listed in this disclosure are hereby incorporated by reference in their entireties.

### BRIEF DESCRIPTION OF THE DRAWINGS

The following descriptions should not be considered limiting in any way. With reference to the accompanying drawings, like elements are numbered alike.

Features and aspects of embodiments are described below with reference to the accompanying drawings, in which elements are not necessarily depicted to scale.

Example embodiments of the present disclosure are further described with reference to the appended figures. It is to be noted that the various features, steps, and combinations of features/steps described below and illustrated in the figures can be arranged and organized differently to result in embodiments which are still within the scope of the present disclosure. To assist those of ordinary skill in the art in making and using the disclosed assemblies, systems and methods, reference is made to the appended figures, wherein:
FIG. 1 is a top view of a thin film sensor assembly, according to certain embodiments of the present disclosure;
FIG. 2 is a cross-sectional side view of the thin film sensor assembly of FIG. 1;
FIG. 3 is another cross-sectional side view of the thin film sensor assembly of FIG. 1;
FIG. 4 shows a mullite coated SiC-SiC CMC substrate with embedded Pt wires; the mullite coating covers much of the Pt wire except the very end of the wire; the CMC coupon has undergone initial phase of heat treatment;
FIG. 5 shows a mullite coated SiC-SiC CMC substrate with embedded Pt wires that were exposed prior to thin film deposition; the mullite coating which covers the Pt wires was fully heat treated;
FIG. 6 shows a mullite coated SiC-SiC CMC substrate showing a thin film thermocouple leg deposited onto an exposed platinum wire; and
FIG. 7 is a graph showing the thermoelectric response of a Pt:ITO (indium tin oxide) thin film thermocouple that was connected to embedded Pt wires; the temperature was ramped from 68 °F to 600 °F.

### DETAILED DESCRIPTION

A detailed description of one or more embodiments of the disclosed apparatus and method are presented herein by way of exemplification and not limitation with reference to the figures.

The example embodiments disclosed herein are illustrative of thin film sensor assemblies, and systems of the present disclosure and methods/techniques thereof. It should be understood, however, that the disclosed embodiments are merely examples of the present disclosure, which may be embodied in various forms. Therefore, details disclosed herein with reference to example thin film sensor assemblies and associated processes/techniques of fabrication/assembly and use are not to be interpreted as limiting, but merely as the basis for teaching one skilled in the art how to make and use the assemblies/systems and/or alternative assemblies/systems of the present disclosure.

The present disclosure provides for electrical connectivity to high temperature film sensor devices (e.g., temperature sensor devices). More particularly, the present disclosure provides for high temperature, thin film sensor devices (e.g., temperature sensor devices) having connection of wires and cabling from the cold side to the thin film sensor on the hot side.

As noted above, current practice provides that for some thin film sensor devices applied to a hot side surface (e.g., of an aero turbine engine component), the thin film sensor devices can be exposed to hot gas temperatures (e.g., in the range of 2200 °F to 3500 °F). The electrical wires typically need to be connected to the thin film sensor to complete the circuit of the sensor, and the wires typically are passed to a less severe environment (e.g., to the signal conditioning and/or data acquisition system of the sensor). The present disclosure advantageously provides for high temperature, thin film sensor devices (e.g., temperature sensor devices) having connection of wires and cabling from the cold side to the thin film sensor on the hot side, as discussed further below.

As also noted above, the use of thin film applications for creating sensor devices (e.g., thermocouples (TC) or resistance temperature detectors (RTD)) applied to high temperature applications (e.g., for turbine engine vanes, blades, shrouds, or combustor panels) can require the eventual electrical connection of the thin film device back to the signal conditioning and/or data acquisition system. The electrical connection most often will require it to be at or near the high-temperature location that the sensor device (e.g., TC or RTD) is installed. The electrical wires are then routed out to a more adequate temperature environment where the instrumentation and control system reside. The present disclosure advantageously provides assemblies, systems and methods for that electrical connection to the leads or traces of the thin film sensor device (e.g., thin film temperature sensor device such as a TC/RTD device) at the hot-cold barrier that exists in high temperature components (e.g., high temperature components in aero turbine engine applications). It is noted that the present disclosure is not limited to TCs or RTDs or the like, and the assemblies, systems and methods of the present disclosure can be applied to any thin film device (e.g., sensor devices, such as, for example, strain gauges, heat flux sensors, etc.) that can be applied to the surface of a high temperature component.

It is noted that some conventional thermocouples are two-wire devices where the wires are dissimilar metals that are chosen such that when joined at a point create a voltage when that junction is exposed to a temperature different from a known reference temperature. Platinum and platinum-rhodium of various ratios are common thermocouple wire pairs for high temperature applications.

A resistance temperature device (RTD) uses identical materials for its wires, usually platinum, nickel, or copper; platinum is common for its properties at higher temperatures. An RTD measures the change of resistance as a function of temperature at the point of measurement where the resistance is higher due to its arrangement, usually made up of a long length of reduced cross-sectional area wire or film arranged in a serpentine pattern. Also, depending on the required accuracy and arrangement, an RTD can be a two-wire, three-wire, or a four-wire device.

Applying thin films to create a sensor device (e.g., thermocouple) can require applying high temperature metals or other materials that can be printed or sputtered onto the component surface. Typically, the material used for fabricating the aero turbine engine component (e.g., vane, etc., or other aero turbine engine component) will be electrically conductive and will require a thin barrier applied to the surface that has a low dielectric property and is applied where the then film device and traces are to be applied. The thin film sensor (e.g., thermocouple) will use dissimilar materials for each thin film leg (e.g., thermocouple leg) which then come together to form the junction (e.g., thermocouple junction) at the point of measurement. Similarly, a thin film application for a resistance temperature device can require the printing or sputtering of two to four platinum or other material to create the traces connecting to the printed or sputtered serpentine pattern at the point of measurement. Other thin film sensor devices can be applied in a similar fashion depending on its form, function, and/or material requirements.

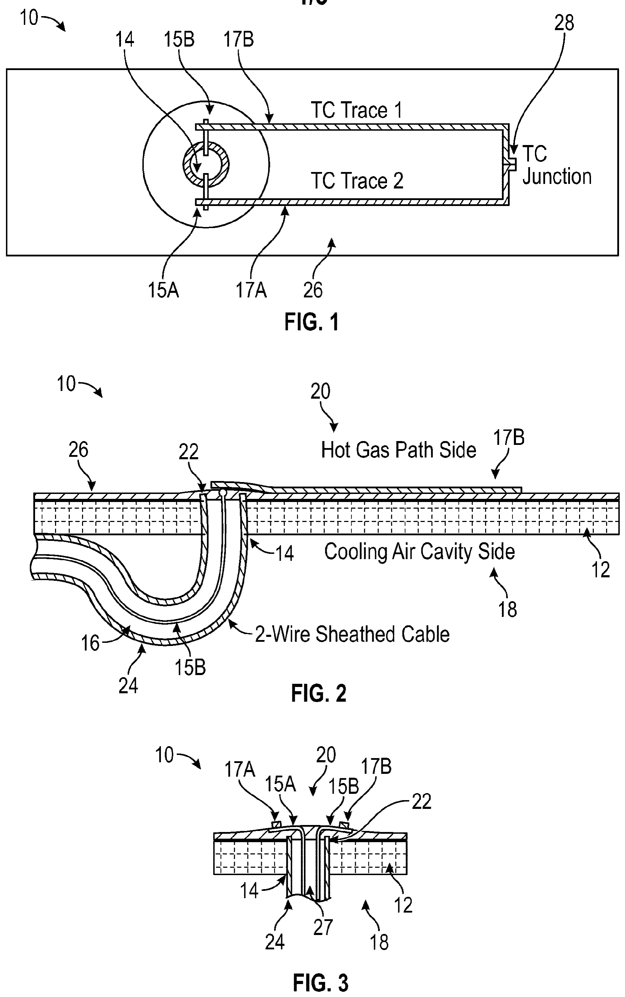

FIG. 1 is a top view of a thin film sensor assembly 10 (e.g., thin film temperature sensor assembly 10) according to certain embodiments of the present disclosure. FIG. 2 is a cross-sectional side view of the thin film sensor assembly 10 of FIG. 1. FIG 3 is another cross-sectional side view of the thin film sensor assembly 10 of FIG. 1 (rotated 90 degrees relative to FIG. 2).

In general and as shown in FIGS. 1-3, example thin film sensor assembly 10 includes a component wall 12 having at least one hole or opening 14 therethrough. In example embodiments, the component wall 12 is a wall 12 of an aero turbine engine component. For example and without limitation, component wall 12 can be a wall 12 of a vane or the like of an aero turbine engine component.

Each hole or opening 14 (e.g., small hole/opening 14) in component wall 12 can be machined or fabricated through the wall 12. It is noted that the number of holes 14 depends on the number of thin film traces 17 and/or the number of wires 15 per cable 16, as discussed below. For an example two-wire 15A, 15B thin film thermocouple or the like, a single hole 14 can be required to allow a two-wire 15A, 15B cable 16 to pass through from the cold side 18 (e.g., cooling air cavity side 18) to the hot side 20 (e.g., hot gas path side 20) of the component wall 12 (e.g., wall 12 of a vane or the like of an aero turbine engine component), as shown in FIG. 1.

An end 22 of the sheathing 24 of cable 16 can be flush or just below or above the surface of the hot side 20 of the component wall 12, and short lengths of a first wire 15A and a second wire 15B from the cable 16 can extend beyond the surface of the hot side 20 of the component wall 12. The first and second wires 15A, 15B can be bent down (e.g., bent 90 degrees down) away from each other and laid down on a low dielectric barrier 26 or layer of low dielectric material 26 applied on the hot side 20 of the component wall 12.

A thin layer of low dielectric material 26 (e.g., the same low dielectric material 26 as noted above) can be applied and cured over the leads defined by the short lengths of first and second wires 15A, 15B laid down on material/barrier 26 to contain the leads of 15A, 15B securely (and to encapsulate end 22 of cable 16). The surface at and around the ends of leads of 15A, 15B can be sanded (e.g., lightly sanded) or gradually removed to remove the low dielectric material 26 over the ends of wires 15A, 15B, and to expose the ends of metal wires 15A, 15B for the purpose of electrical connection with the first trace 17A and the second trace 17B, respectively, as described below. It is noted that the removal of the material 26 can expose the wires 15A, 15B, but nothing else of the cable 16 below.

In an example embodiment and without limitation, the low dielectric material 26 can be a slurry of mullite ceramic powder in a liquid carrier and activator, typically a refractory ceramic colloid water.

In an example embodiment and without limitation, the cable 16 can include a thin wall metal sheathing 24 containing or housing two electrically conductive metal materials, first and second wires 15A, 15B. The choice of materials for the first and second wires 15A, 15B can depend on the temperature capability needed of the material and its electrical properties, and for a high temperature example platinum can be required.

For an example of a high temperature thin film thermocouple of assembly 10, typically the first and second wires 15A, 15B should match the material as the film traces 17A, 17B, otherwise a thermocouple junction can be created at each electrical connection where materials are not identical.

For an example resistance temperature device of assembly 10, the first and second wires 15A, 15B need not match the trace materials 17A, 17B, but they should have adequate temperature capability for the particular use case.

The first and second wires 15A, 15B can be encapsulated in a ceramic powder material 27 providing space and insulation from each wire 15A, 15B and the outer sheathing 24. The sheathing 24 can also be a high temperature metal material (e.g., Inconel 625 or platinum or the like). The cable 16 can be routed and mounted and strain-relieved on the cold side 18 of the component wall 12 and routed to its terminal connection and/or system equipment or the like.

With the leads defined by the short lengths of first and second wires 15A, 15B laid down on material/barrier 26 in place and after sanding them as described above, the process of applying the traces 17A, 17B and thin film sensor 28 to the layer 26 of thin low dielectric can proceed. This process can include a masking of the surface 26 to expose only the portion of the surface 26 that will define the traces 17A, 17B of the sensor 28 and the sensor 28 itself. The traces 17A, 17B can be routed in such a manner as to intersect the 90° bent wires 15A, 15B from cable 16 as appropriate for the function of sensor 28. With a mask in place, a thin film material can be applied to provide the traces 17A, 17B of the sensor 28 and the sensor 28 itself, and the application of such a thin film material over each wire 15A, 15B will complete the circuit of the sensor 28 (via traces 17A, 17B providing electrical connection with the first and second wires 15A, 15B, respectively).

It is noted that the thin low dielectric layer 26 provides electrical insulation from the electrically conductive component of sensor 28 and traces 17A, 17B.

There are many benefits of the assemblies 10, systems and methods of the present disclosure, including, without limitation, that the order of an example process can require the wires 15A, 15B to be in place prior to printing the sensor material on the component surface, eliminating the difficult process of welding wire onto the sensors thin film contact; as such this can improve the likelihood of successful electrical connection between wires 15A, 15B and traces 17A, 17B.

This disclosure is further illustrated by the following examples, which are non-limiting.

### EXAMPLE 1: A Direct Wire Connection Technique for Thin Film Instrumentation

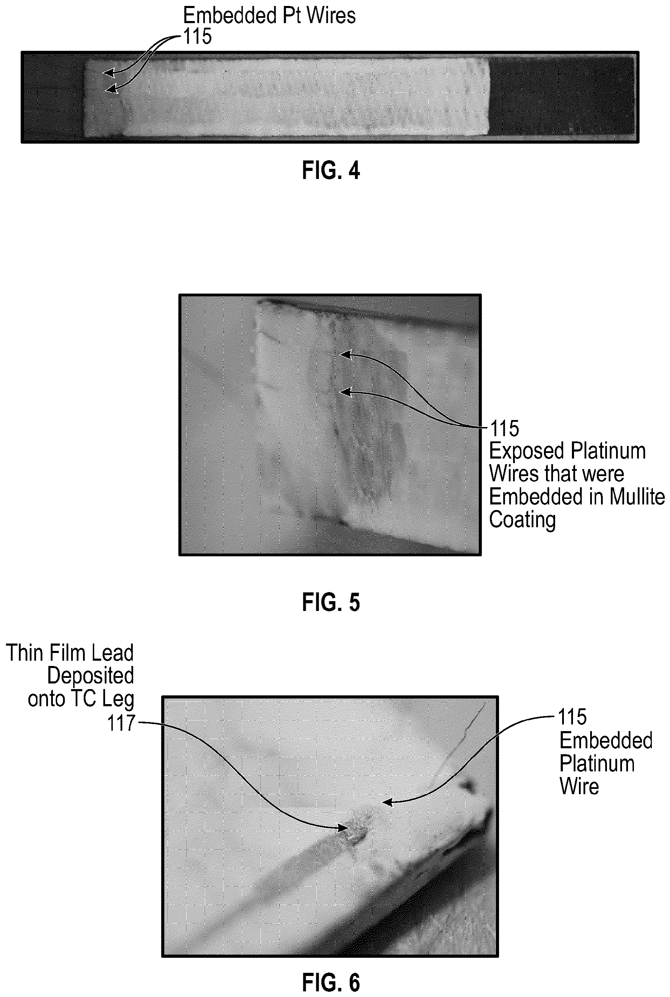

A technique was developed in which thin platinum wires 115 (0.001 inch diameter) were embedded within the surface layers of a mullite coating on a SiC/SiC ceramic matrix composite (CMC) onto which thin film leads 117 were deposited directly onto the exposed (embedded) wires 115 as shown in FIGS. 4-6. The thin film leads 117 were deposited directly onto the platinum wires 115 and formed an ohmic contact. They did not require welding or conductive pastes to facilitate a mechanically robust connection because the thin film leads 117 were sputter-deposited onto the embedded wire 115.

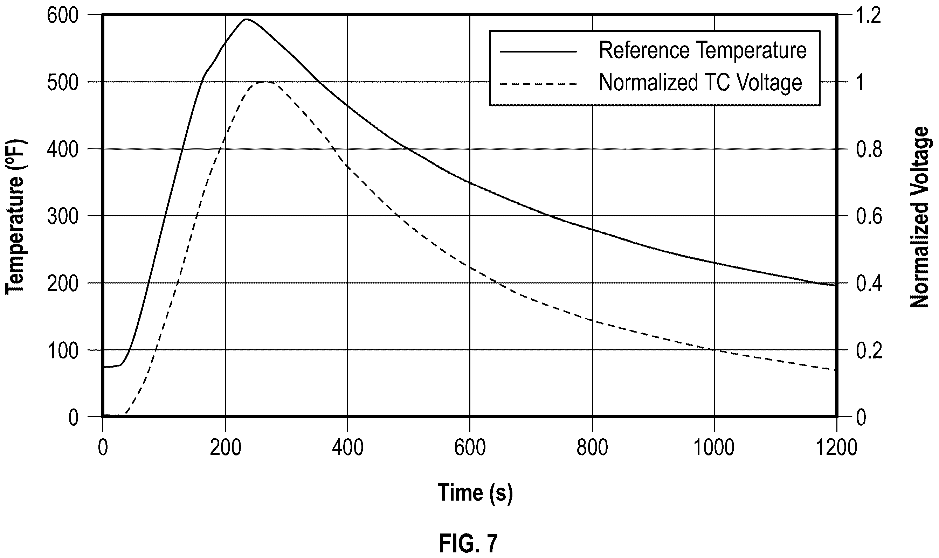

The layer of mullite was heat treated. SiC grinding/polishing paper was used to expose the flattened end of the embedded wire 115 so that a small portion of the wire surface was exposed. The final step was to deposit the thin film thermocouple leg or lead 117 over the exposed embedded wire 115 to form an ohmic contact and provide a reproducible thermoelectric response. FIG. 7 is a graph showing the thermoelectric response of a Pt:ITO (indium tin oxide) thin film thermocouple that was connected to embedded Pt wires; the temperature was ramped from 68 °F to 600 °F.

While particular embodiments have been described, alternatives, modifications, variations, improvements, and substantial equivalents that are or may be presently unforeseen may arise to applicants or others skilled in the art. Accordingly, the appended claims as filed and as they may be amended are intended to embrace all such alternatives, modifications variations, improvements, and substantial equivalents.

The term "about" is intended to include the degree of error associated with measurement of the particular quantity based upon the equipment available at the time of filing the application. For example, "about" can include a range of ± 8% or 5%, or 2% of a given value.

The ranges disclosed herein are inclusive of the endpoints, and the endpoints are independently combinable with each other (e.g., ranges of "up to 25 wt.%, or, more specifically, 5 wt.% to 20 wt.%", is inclusive of the endpoints and all intermediate values of the ranges of "5 wt.% to 25 wt.%," etc.). "Combinations" is inclusive of blends, mixtures, alloys, reaction products, and the like. The terms "first," "second," and the like, do not denote any order, quantity, or importance, but rather are used to distinguish one element from another. "Or" means "and/or" unless clearly stated otherwise. Reference throughout the specification to "some embodiments", "an embodiment", and so forth, means that a particular element described in connection with the embodiment is included in at least one embodiment described herein, and may or may not be present in other embodiments. In addition, it is to be understood that the described elements may be combined in any suitable manner in the various embodiments. A "combination thereof" is open and includes any combination comprising at least one of the listed components or properties optionally together with a like or equivalent component or property not listed.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

Unless defined otherwise, technical and scientific terms used herein have the same meaning as is commonly understood by one of skill in the art to which this application belongs. All cited patents, patent applications, and other references are incorporated herein by reference in their entirety. However, if a term in the present application contradicts or conflicts with a term in the incorporated reference, the term from the present application takes precedence over the conflicting term from the incorporated reference.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

Although the assemblies, systems and methods of the present disclosure have been described with reference to example embodiments thereof, the present disclosure is not limited to such example embodiments and/or implementations. Rather, the assemblies, systems and methods of the present disclosure are susceptible to many implementations and applications, as will be readily apparent to persons skilled in the art from the disclosure hereof. The present disclosure expressly encompasses such modifications, enhancements and/or variations of the disclosed embodiments. Since many changes could be made in the above construction and many widely different embodiments of this disclosure could be made without departing from the scope thereof, it is intended that all matter contained in the drawings and specification shall be interpreted as illustrative and not in a limiting sense. Additional modifications, changes, and substitutions are intended in the foregoing disclosure. Accordingly, it is appropriate that the appended claims be construed broadly and in a manner consistent with the scope of the disclosure.

## Claims

1. A thin film sensor assembly (10) comprising:
a component wall (12) having a hole therethrough, the component wall (12) having a cold side (18) and a hot side (20);
a cable (16) positioned in the hole, the cable (16) having a first wire (15A) and a second wire (15B);
a layer of low dielectric material (26) positioned on the hot side (20) of the component wall (12), with a first length of the first wire (15A) positioned on the layer of low dielectric material (26), and a second length of the second wire (15B) positioned on the layer of low dielectric material (26); and
a first trace of film material (17A) in electrical connection with the first length of the first wire (15A) positioned on the layer of low dielectric material (26) and a second trace of film material (17B) in electrical connection with the second length of the second wire (15B) positioned on the layer of low dielectric material (26);
wherein the first and second traces of film material (17A, 17B) are in electrical communication with a sensor (28) positioned on the layer of low dielectric material (26).

2. The thin film sensor assembly (10) of claim 1, wherein the sensor (28) is positioned proximal to the hot side (20).

3. A method for fabricating a thin film sensor assembly (10) comprising:
providing a component wall (12) having a hole therethrough, the component wall (12) having a cold side (18) and a hot side (20);
positioning a cable (16) in the hole, the cable (16) having a first wire (15A) and a second wire (15B);
positioning a layer of low dielectric material (26) on the hot side (20) of the component wall (12);
positioning a first length of the first wire (15A) on the layer of low dielectric material (26);
positioning a second length of the second wire (15B) on the layer of low dielectric material (26);
providing a first trace of film material (17A) in electrical connection with the first length of the first wire (15A) positioned on the layer of low dielectric material (26);
providing a second trace of film material (17B) in electrical connection with the second length of the second wire (15B) positioned on the layer of low dielectric material (26); and
positioning a sensor (28) on the layer of low dielectric material (26), the first and second traces of film material (17A, 17B) in electrical communication with the sensor (28).

4. The method of claim 3, further comprising after positioning the first and second lengths of the first and second wires (15A, 15B) on the layer of low dielectric material (26), providing and curing additional dielectric material over the first and second lengths of the first and second wires (15A, 15B), and then removing a portion of the additional dielectric material over the first and second lengths of the first and second wires (15A, 15B).

5. The thin film sensor assembly (10) or method of any preceding claim, wherein the component wall (12) is a wall of an aero turbine engine component; and
wherein the cold side (18) is an internal cooling air cavity side (18) of the aero turbine engine component, and the hot side (20) is an external gas path side of the aero turbine engine component.

6. The thin film sensor assembly (10) or method of any preceding claim, wherein the sensor (28) is a high temperature, thin film temperature sensor (28).

7. The thin film sensor assembly (10) or method of any preceding claim, wherein the sensor (28) is a thermocouple or a resistance temperature detector.

8. The thin film sensor assembly (10) or method of any preceding claim, wherein the layer of low dielectric material (26) comprises a ceramic material.

9. The thin film sensor assembly (10) or method of any preceding claim, wherein the cable (16) comprises a sheathing (24), the sheathing (24) comprising a metal material.

10. The thin film sensor assembly (10) or method of any preceding claim, wherein the component wall (12) is a wall of a vane of an aero turbine engine component.

11. The thin film sensor assembly (10) or method of any preceding claim, wherein the cable (16) is routed and mounted or strain-relieved on the cold side (18) of the component wall (12) and routed to a terminal connection or system equipment.

12. The thin film sensor assembly (10) or method of any preceding claim, wherein the first and second wires (15A, 15B) comprise electrically conductive metal materials.
